# EUROPÄISCHE PATENTSCHRIFT

(11) **EP 3 854 468 B1**
(45) Veröffentlichungstag und Bekanntmachung des Hinweises auf die Patenterteilung: **14.12.2022**
(21) Anmeldenummer: 21150873.4
(22) Anmeldetag: 11.01.2021
(51) Int. Cl.: B01D 29/15, B01D 29/66, B01D 46/24

(54) **RINGFILTERELEMENT UND ZUGEHÖRIGES HERSTELLUNGSVERFAHREN SOWIE GEEIGNETE FILTEREINRICHTUNG**
RING FILTER ELEMENT AND CORRESPONDING MANUFACTURING METHOD AND SUITABLE FILTER DEVICE
ÉLÉMENT FILTRANT ANNULAIRE ET PROCÉDÉ DE FABRICATION ASSOCIÉ, AINSI QUE DISPOSITIF FILTRANT CORRESPONDANT

(30) Priorität: 27.01.2020 DE 102020200903
(43) Veröffentlichungstag der Anmeldung: 28.07.2021
(73) Patentinhaber: Filtration Group GmbH, 74613 Öhringen (DE)
(72) Erfinder: GAUGLER, Thomas, 74613 Öhringen (DE)
(74) Vertreter: BRP Renaud & Partner mbB Rechtsanwälte Patentanwälte Steuerberater

(56) Entgegenhaltungen:
- DE-B- 1 013 623
- DE-B- 1 253 236
- US-A- 3 570 675
- US-B1- 7 404 838

## Beschreibung

Die vorliegende Erfindung betrifft ein Ringfilterelement zum Filtern eines flüssigen oder gasförmigen Mediums gemäß dem Oberbegriff des Anspruchs 1. Die Erfindung betrifft außerdem ein Verfahren zum Herstellen eines derartigen Ringfilterelements. Schließlich betrifft die vorliegende Erfindung noch eine Filtereinrichtung, die mit einem derartigen Ringfilterelement ausgestattet ist.

Ein herkömmliches Ringfilterelement ist z.B. aus der US 9 868 083 B2 bekannt. Das Ringfilterelement weist einen ringförmigen Filterkörper aus einem Filtermaterial auf, der vom Medium durchströmbar ist. Ferner weist das Ringfilterelement eine ringförmige Innenzarge aus einem Stützmaterial auf, die konzentrisch im Filterkörper angeordnet ist und die ebenfalls vom Medium durchströmbar ist. Die Filtrationsfunktion wird dabei vom Filterkörper wahrgenommen, also nicht von der Innenzarge. Die Innenzarge stützt den Filterkörper radial innen ab und stabilisiert dadurch das Ringfilterelement, das im Filtrationsbetrieb radial von außen nach innen von zu reinigendem Medium durchströmt wird. Für diese Stützfunktion liegt der Filterkörper mit seiner radial innenliegenden Körperinnenseite radial an einer radial außenliegenden Zargenaußenseite an.

Während des Filtrationsbetriebs lagern sich Verunreinigungen an der außenliegenden Anströmseite des Filterkörpers an und erhöhen im Laufe der Zeit den Durchströmungswiderstand des Filterkörpers. Für eine erhöhte Standzeit des Filterelements ist es z.B. aus der vorstehend genannten US 9 868 083 B2 bekannt, einen Rückspülvorgang durchzuführen, bei dem beispielsweise gefiltertes Medium in umgekehrter Strömungsrichtung, also radial von innen nach außen den Filterkörper durchströmt. Ein derartiger Regenerationsvorgang kann dabei mit erhöhtem Druck und/oder gepulst durchgeführt werden. Ohne zusätzliche Schutzmaßnahmen würde das Filtermaterial bei einem derartigen Rückspülvorgang von der Innenzarge abheben, was insbesondere bei gepulsten Rückspülungen unter erhöhtem Druck zu einem starken Verschleiß des Filterkörpers führen kann. Zur Vermeidung eines derartigen Verschleißes ist es bei dem aus der vorstehend genannten US 9 868 083 B2 bekannten Ringfilterelement bekannt, an der radial außenliegenden Körperaußenseite mehrere Stützringe am Filterkörper anzuordnen, die den Filterkörper an der Innenzarge anliegend in Position halten. Die Stützringe sind dabei mittels eines Klebstoffs am Filterkörper befestigt.

Bei bestimmten Filtrationsaufgaben kann es unerwünscht sein, derartige Stützringe zu verwenden. Beispielsweise kann das Medium ein Produkt transportieren, das mit Hilfe des Ringfilterelements aus dem Mediumstrom abgeschieden wird, um es einer weiteren Verwendung zuführen zu können. Das gewünschte Produkt fällt somit an der Anströmseite, also an der Rohseite des Filterkörpers an. Durch Alterungsprozesse und aufgrund der hohen mechanischen Belastung können Partikel der Stützringe in das Produkt gelangen. Insbesondere im Rahmen der Lebensmittelproduktion, beispielsweise bei der Herstellung von Mehl, ist eine Beimengung von Partikeln solcher Stützringe zum gewünschten Produkt zu vermeiden. Auch ist die Verwendung von Klebstoffen auf der Rohseite unerwünscht, um eine Kontamination des Produkts mit Klebstoffpartikeln zu vermeiden.

Aus der DE 12 53 236 B ist ein gattungsgemäßes Ringfilterelement bekannt, das sich vom vorstehend genannten herkömmlichen Ringfilterelement durch mehrere Halter unterscheidet, die an der Körperinnenseite angeordnet sind und durch Klebstreifen gebildet sind, die radial innen an der Innenzarge und radial außen mit dem Filterkörper klebend befestigt sind.

Ähnliche Ringfilterelemente sind aus der DE 10 13 623 B, bei dem der Halter eine klebfähige Bindemittelschicht ist, aus der US 7 404 838 B1, bei dem der Halter ein Epoxid oder ein Polymer oder ein Klebstoff ist, und aus der US 3 570 675 A bekannt, bei dem der Halter eine punktierte Bindeschicht aus einem thermoplastischen Polypropylen ist.

Aus der GB 1 255 894 A ist ein anderes Ringfilterelement bekannt, bei dem ein schlauchförmiges Filtermaterial auf Längsstege einer Innenzarge aufgeklebt ist. Bei diesem Ringfilterelement ist die Innenzarge mit einem durchgehenden Längsschlitz versehen, so dass sie sich beim Filtrationsbetrieb elastisch radial zusammenzieht. Für eine Regeneration wird der Filtrationsbetrieb unterbrochen, wodurch sich die Innenzarge in ihre Ausgangsform ausdehnt und dabei außen angelagerten Filterkuchen absprengt.

Die vorliegende Erfindung beschäftigt sich mit dem Problem, für ein Ringfilterelement bzw. für ein zugehöriges Verfahren bzw. für eine zugehörige Filtereinrichtung eine verbesserte Ausführungsform anzugeben, welche die vorstehend genannten Nachteile vermeidet. Insbesondere soll die Gefahr einer Kontamination eines mit Hilfe des Ringfilterelements aus einem Mediumstrom herausgefilterten Produkts reduziert werden.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, radial zwischen der Innenzarge und dem Filterkörper zumindest einen Halter anzuordnen, der einen Expansionskörper aus einem Expansionsmaterial aufweist. Während der Herstellung des Ringfilterelements ist das Expansionsmaterial des Expansionskörpers zunächst nicht expandiert, wodurch es für die Montage des Ringfilterelements leicht möglich ist, zunächst wenigstens einen Halter an der Zargenaußenseite anzubringen und anschließend die Innenzarge und den Filterkörper koaxial ineinander zu stecken. Anschließend wird das Expansionsmaterial auf geeignete Weise aktiviert, so dass es expandiert, insbesondere aufschäumt, und sich sowohl mit der Innenzarge als auch mit dem Filtermaterial fest verbinden kann. Im expandierten Zustand ist dann das Expansionsmaterial radial innen mit der Innenzarge fest verbunden und radial außen mit dem Filterkörper fest verbunden. Dabei ist der Expansionskörper nach dem Expandieren bzw. nach dem Aufschäumen ein Schaumkörper. Hierdurch wird mit Hilfe des Halters der Filterkörper radial an der Innenzarge festgelegt, so dass der Filterkörper auch bei einer Durchströmung von radial innen nach außen, also insbesondere bei einer Rückspülung nicht von der Innenzarge abheben kann. Hierdurch wird die mechanische Belastung des Filtermaterials während solcher Regenerationsvorgänge reduziert. Gleichzeitig wird erreicht, dass eine Kontamination des sich während des Filtrationsbetriebs an der Anströmseite anlagernden Produkts mit Partikeln des Halters unterbleibt.

Die Innenzarge ist vorzugsweise geschlossen ringförmig, also als geschlossener Ring ausgestaltet und insoweit in der Umfangsrichtung ungeschlitzt ausgestaltet. Zusätzlich oder alternativ kann die Zargenaußenseite in der Umfangsrichtung vorzugsweise einen stetigen Radius und insbesondere einen konstanten Radius aufweisen, wobei der Radius auf die Längsmittelachse der Innenzarge bezogen ist. Somit ist die Innenzarge an der Zargenaußenseite stegfrei, also insbesondere frei von Längsstegen. Insbesondere ist dadurch die Zargenaußenseite, abgesehen von etwaigen Durchtrittsöffnungen, welche die Durchströmung der Innenzarge ermöglichen, in der Umfangsrichtung kontinuierlich geformt.

Gemäß einer vorteilhaften Ausführungsform kann der Expansionskörper bzw. das Expansionsmaterial mittels Formschluss an der Innenzarge befestigt sein. Durch die Expansion bzw. Ausdehnung des Expansionsmaterials lässt sich ein derartiger Formschluss besonders einfach realisieren. Ferner zeichnet sich ein derartiger Formschluss durch eine hohe Festigkeit aus.

Zweckmäßig kann die Innenzarge eine Stützstruktur mit radialen Durchtrittsöffnungen aufweisen, die vom Medium durchströmbar sind. Das Expansionsmaterial kann nun einige dieser Durchtrittsöffnungen zumindest teilweise ausfüllen und/oder durchdringen. Hierdurch wird eine besonders effiziente Haftung durch Formschluss realisiert.

Des Weiteren kann vorgesehen sein, dass das Expansionsmaterial einige dieser Durchtrittsöffnungen radial durchdringt und die Stützstruktur hintergreift. Mit anderen Worten, durch die Expansion gelangt das Expansionsmaterial bis an eine radial innenliegende Zargeninnenseite und kann sich dort in Umfangsrichtung und in Axialrichtung über eine Begrenzung der Durchtrittsöffnungen hinaus ausbreiten und so die Stützstruktur formschlüssig hintergreifen. Das Expansionsmaterial liegt dann auch an der Zargeninnenseite an. Hierdurch wird die Stützstruktur zumindest teilweise in das Expansionsmaterial eingebettet. Die Haltekraft der Verbindung wird dadurch besonders groß.

Gemäß einer anderen Ausführungsform kann der Expansionskörper bzw. das Expansionsmaterial mittels Formschluss am Filterkörper befestigt sein. Auch hierdurch wird eine besonders intensive Fixierung zwischen Halter und Filtermaterial realisiert.

Gemäß einer Weiterbildung kann das Expansionsmaterial an der Körperinnenseite in das Filtermaterial eindringen, so dass dort das Filtermaterial in das Expansionsmaterial eingebettet ist. Hierdurch ergibt sich eine besonders intensive Verbindung, die große Kräfte übertragen kann. Zweckmäßig dringt das Expansionsmaterial nur so weit in das Filtermaterial ein, dass ein Abstand zur Filteraußenseite verbleibt. Insbesondere wird dadurch eine vollständige Durchdringung des Filtermaterials mit Expansionsmaterial vermieden.

Gemäß einer anderen Ausführungsform kann das Ringfilterelement an seinen axialen Enden jeweils eine Endscheibe aufweisen, die den Filterkörper axial begrenzen und die an der Innenzarge und am Filterkörper befestigt sind. Die Endscheiben können aus Kunststoff oder Metall bestehen. Die Innenzarge kann aus Kunststoff oder Metall bestehen. Zweckmäßig bestehen die Endscheiben und die Innenzarge aus demselben Material. Das Filtermaterial ist zweckmäßig gefaltet. Das Filtermaterial kann mehrlagig sein.

Abhängig von der axialen Länge des Filterelements und von der Druckbelastung des Filterelements kann ein einziger Halter ausreichen. Ebenso sind Ausführungsformen denkbar, bei denen mehrere derartige Halter vorgesehen sind, die voneinander sowie von den axialen Enden des Filterkörpers und der Innenzarge axial beabstandet angeordnet sind.

Bevorzugt ist dabei eine Ausführungsform, bei welcher sich jeder Halter oder wenigstens einer der Halter in der Umfangsrichtung über wenigstens 360° erstreckt. Dadurch ist sichergestellt, dass die Körperinnenseite in der Umfangsrichtung geschlossen an der Zargenaußenseite festgelegt ist.

Zweckmäßig kann das Filtermaterial gefaltet sein, so dass benachbarte Falten jeweils durch einen Falz miteinander verbunden sind. Beim gefalteten Filtermaterial wird die Körperinnenseite durch die radial innenliegenden Falze gebildet. Bei einem gefalteten Filtermaterial kann vorteilhafterweise vorgesehen sein, dass sich jeder Halter oder wenigstens einer der Halter in der Umfangsrichtung erstreckt und mit allen radial innenliegenden Falzen fest verbunden ist. Auch diese Maßnahme sorgt dafür, dass die Körperinnenseite in der Umfangsrichtung geschlossen an der Zargenaußenseite festgelegt ist.

Besonders vorteilhaft ist eine Ausführungsform, bei welcher jeder oder wenigstens einer der Halter ringförmig oder ringsegmentförmig oder schraubenförmig oder schraubensegmentförmig ausgestaltet ist und sich in der Umfangsrichtung erstreckt. Insbesondere kann der jeweilige Halter somit auch einen Ring bilden, der z.B. als Kreis geformt sein kann, wenn er in einer senkrecht zur Längsmittelachse des Filterelements verlaufenden Radialebene liegt, oder als Ellipse geformt sein kann, wenn er in einer gegenüber der Radialebene geneigten Ebene liegt.

Alternativ ist auch denkbar, dass wenigstens einer der Halter mehrere Haltersegmente aufweist, die in der Umfangsrichtung verteilt und voneinander beabstandet angeordnet sind.

Vorzugsweise ist vorgesehen, dass der Halter durch den Expansionskörper gebildet ist. Somit sind keine weiteren Komponenten erforderlich, um den Halter zu realisieren. Alternativ kann auch vorgesehen sein, dass der Halter zusätzlich zum Expansionskörper noch wenigstens eine weitere Komponente aufweist, z.B. einen nichtklebenden Abdeckstreifen oder eine Antihaftbeschichtung, um den selbstklebend ausgestalteten Expansionskörper vor dessen Expansion leicht manuell hantieren und an der Innenzarge montieren zu können, oder z.B. einen Klebestreifen oder ein Klebe- oder Haftbeschichtung, um den nicht selbstklebend ausgestalteten Expansionskörper für die Montage des Filterelements vor dem Expandieren des Expansionsmaterials an der Innenzarge befestigen zu können.

Ein erfindungsgemäßes Verfahren zum Herstellen eines derartigen Ringfilterelements charakterisiert sich dadurch, dass zunächst wenigstens ein Halter an der Zargenaußenseite festgelegt wird, wobei das Expansionsmaterial noch nicht expandiert ist. Anschließend werden der Filterkörper und die Innenzarge aneinander angeordnet, derart, dass anschließend die Körperinnenseite zumindest am jeweiligen Halter anliegt. Beispielsweise kann der Filterkörper auf die Innenzarge aufgeschoben werden. Ebenso ist denkbar, die Innenzarge in den Filterkörper einzuschieben. Durch die Elastizität des Filterkörpers und durch eine entsprechende Dimensionierung von Filterkörper und Innenzarge liegt die Körperinnenseite zweckmäßig auch außerhalb des Halters an der Zargenaußenseite an.

Anschließend wird das Expansionsmaterial des jeweiligen Halters aktiviert, so dass das Expansionsmaterial expandiert und sich dadurch mit der Innenzarge und mit dem Filterkörper fest verbindet. Bei der Expansion dehnt sich das Expansionsmaterial aus. Beispielsweise dehnt sich das Expansionsmaterial um mehr als 100%, vorzugsweise über mehr als 200% seines Volumens aus, so dass es nach der Expansion ein Endvolumen aufweist, das mindestens zweimal oder mindestens dreimal größer ist als ein Ausgangsvolumen vor der Expansion. Die Expansion ist ein Aufschäumvorgang, so dass der Expansionskörper nach der Expansion ein Schaumkörper ist. Dieser Schaumkörper ist bevorzugt geschlossenporig ausgestaltet, kann jedoch auch offenporig ausgestaltet sein.

Nach dem Expansionsvorgang bleibt das Expansionsmaterial formstabil. Das expandierte Expansionsmaterial kann dabei gummielastisch sein oder aber vergleichsweise starr und steif sein. Das Aktivieren kann je nach Expansionsmaterial thermisch oder induktiv oder mit einem Hilfsstoff erfolgen.

Zweckmäßig kann zumindest während der Expansion des Expansionsmaterials das Filtermaterial gegen die Innenzarge angedrückt werden. Hierdurch wird die gewünschte Positionierung zwischen Filterkörper und Innenzarge realisiert, in welcher die Körperinnenseite an der Zargenaußenseite anliegt, so dass das Filtermaterial unmittelbar an der Innenzarge abgestützt ist. Ferner wird dadurch erreicht, dass das Filtermaterial an der Körperinnenseite während des Expansionsvorgangs in den Expansionskörper eindringt, da dieser während des Expansionsvorgangs nachgiebig und nach Art einer Flüssigkeit verdrängbar ist. Somit kann das Filtermaterial auch im Bereich des Halters an der Innenzarge zur Anlage kommen.

Eine andere Ausführungsform sieht vor, dass der jeweilige Halter zumindest bis zur Aktivierung des Expansionsmaterials mit seiner radialen Innenseite an der Zargenaußenseite haftet. Insbesondere kann der Halter hierzu an seiner Innenseite eine Haftschicht oder Klebeschicht aufweisen. Die Montage des Halters an der Innenzarge wird dadurch besonders einfach. Für die Haftung des Halters an der Innenzarge kann dabei grundsätzlich ein Klebstoff zur Anwendung kommen, der sich jedoch mit der Zeit, insbesondere durch die Aktivierung des Expansionsmaterials, verflüchtigt. Alternativ und bevorzugt besitzt jedoch das nicht expandierte Expansionsmaterial bereits die gewünschte Kleben- bzw. Haftwirkung, insbesondere, wenn es sich dabei um ein noch nicht expandiertes und noch nicht ausgehärtetes Harz handelt.

Eine andere Ausführungsform sieht vor, dass das Expansionsmaterial während seiner Expansion in Durchtrittsöffnungen einer Stützstruktur der Innenzarge hinein expandiert. Hierdurch wird ein Formschluss zwischen Halter und Innenzarge realisiert, was eine feste Verbindung zwischen Halter und Innenzarge unterstützt.

Eine andere Ausführungsform sieht vor, dass das Expansionsmaterial während der Expansion in das Filtermaterial hinein expandiert, wodurch das Filtermaterial in das Expansionsmaterial eingebettet wird. Auch hierdurch wird ein Formschluss zwischen Filtermaterial und Halter realisiert, um eine besonders feste Verbindung zu ermöglichen.

Bei einer bevorzugten Ausführungsform kann das Expansionsmaterial ein Kunststoffharz sein, das mittels eines Härters aktivierbar ist, so dass es expandiert, vorzugsweise aufschäumt, und aushärtet. Insbesondere kann es sich dabei um ein Harz auf Epoxid-Basis handeln, also um ein Epoxidharz.

Besonders vorteilhaft ist eine Weiterbildung, bei welcher der Härter im nicht expandierten Zustand des Expansionsmaterials in Mikrokapseln gekapselt ist, die im Harz eingebettet sind und die durch die Aktivierung den Härter freisetzen. Beispielsweise werden durch die Aktivierung die Mikrokapseln zerstört, wodurch der Härter freigesetzt wird. Diese Aktivierung kann bevorzugt thermisch erfolgen.

Eine erfindungsgemäße Filtereinrichtung zum Filtern eines flüssigen oder gasförmigen Mediums bzw. zum Herausfiltern eines Produkts aus einem Medium umfasst zumindest ein Ringfilterelement der vorstehend beschriebenen Art. Zweckmäßig können in der Filtereinrichtung mehrere derartige Ringfilterelemente vorgesehen sein, die insbesondere parallel vom jeweiligen Medium durchströmt werden. Hierzu kann die Filtereinrichtung für das jeweilige Ringfilterelement zumindest eine Halterung aufweisen, die einen reinseitigen Anschluss zum Abführen des gefilterten Mediums besitzt. Die Filtereinrichtung ist nun zur Durchführung eines Filtrationsbetriebs ausgestaltet, bei dem zumindest ein solches Ringfilterelement radial von außen nach innen von dem zu filternden Medium durchströmt wird. Des Weiteren ist die Filtereinrichtung zur Durchführung eines Regenerationsbetriebs ausgestaltet, bei dem zumindest ein solches Ringfilterelement radial von innen nach außen durchströmt wird. Während des Regenerationsbetriebs findet somit eine Rückspülung des jeweiligen Ringfilterelements statt. Die Rückspülung kann zweckmäßig mit dem gereinigten Medium erfolgen. Bevorzugt erfolgt die Rückspülung dabei unter einem erhöhten Druck.

Die Filtereinrichtung kann insbesondere zur Gewinnung eines im zu filternden Medium mitgeführten Produkts ausgestaltet sein. Bevorzugt ist das Produkt durch Festkörperpartikel gebildet, während das Medium ein Gas, vorzugsweise Luft ist. Ebenso ist denkbar, dass Medium eine Flüssigkeit ist. Ferner ist grundsätzlich auch die Separation eines flüssigen Produkts aus einem gasförmigen oder auch aus einem flüssigen Medium möglich. Während des Filtrationsbetriebs sammelt sich dieses Produkt an der Anströmseite des jeweiligen Ringfilterelements an. Durch den Regenerationsbetrieb kann das Produkt vom jeweiligen Ringfilterelement entfernt werden. Es sammelt sich dann an der Rohseite der Filtereinrichtung an und kann von dort leicht entfernt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Filtereinrichtung mit einem Ringfilterelement im Längsschnitt während eines Filtrationsbetriebs,
- Fig. 2: die Filtereinrichtung mit dem Filterelement im Längsschnitt während eines Regenerationsbetriebs,
- Fig. 3: einen Längsschnitt des Ringfilterelements in drei Schritten A, B und C während der Herstellung.

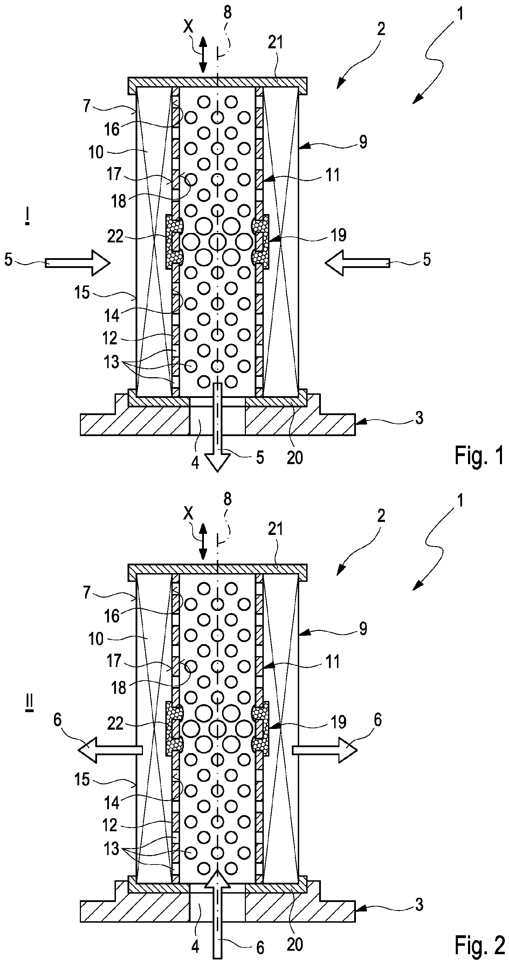

Entsprechend den Figuren 1 und 2 umfasst eine Filtereinrichtung 1, die zum Filtern eines flüssigen oder gasförmigen Mediums bzw. zum Herausfiltern eines vorzugsweise festen Produkts aus dem vorzugsweise gasförmigen Medium dient, zumindest ein Ringfilterelement 2, das zum Filtern des Mediums geeignet ist. Im gezeigten Beispiel ist nur ein einziges Ringfilterelement 2 gezeigt, es ist jedoch klar, dass auch zwei oder mehr Ringfilterelemente 2 in der Filtereinrichtung 1 angeordnet sein können, die dann zweckmäßig parallel vom Medium durchströmbar sind. Die Filtereinrichtung 1 umfasst außerdem zumindest eine Halterung 3 zum Aufnehmen des jeweiligen Ringfilterelements 2. Die Halterung 3 besitzt zumindest einen Anschluss 4, durch den das jeweilige Medium abhängig vom Betriebszustand der Filtereinrichtung 1 vom Ringfilterelement 2 abführbar bzw. dem Ringfilterelement 2 zuführbar ist.

Die Filtereinrichtung 1 ist zur Durchführung eines in Figur 1 angedeuteten Filtrationsbetriebs I ausgestaltet, der sich dadurch definiert, dass zumindest ein Ringfilterelement 2 vom zu filternden Medium radial von außen nach innen durchströmt wird. Die Durchströmung des Ringfilterelements 2 während des Filtrationsbetriebs I ist in Figur 1 durch Pfeile 5 angedeutet. Dabei wird das gefilterte Medium über den Anschluss 4 abgeführt.

Die Filtereinrichtung 1 ist außerdem zur Durchführung eines Regenerationsbetriebs II ausgestaltet, der sich dadurch charakterisiert, dass zumindest ein Ringfilterelement 2 radial von innen nach außen durchströmt wird. Die Durchströmung des Ringfilterelements 2 während des Regenerationsbetriebs II ist in Figur 2 durch Pfeile 6 angedeutet. Dabei wird ein Rückspülmedium, vorzugsweise gereinigtes Medium, über den Anschluss 4 zugeführt.

Während des Filtrationsbetriebs I werden Verunreinigungen, die auch als Produkt bezeichnet werden können und die im Medium mitgeführt werden, am Ringfilterelement 2 abgeschieden, wobei sie sich an einer Anströmseite 7 des Ringfilterelements 2 ansammeln. Während des Regenerationsbetriebs II erfolgt eine Rückspülung, vorzugsweise mit gereinigtem Medium und zweckmäßig mit erhöhtem Druck, wodurch die Anströmseite 7 des Ringfilterelements 2 von den Verunreinigungen bzw. vom Produkt befreit wird.

Das Ringfilterelement 2 ist zylindrisch bzw. zylinderförmig und besitzt demnach eine Längsmittelachse 8. Diese Längsmittelachse 8 definiert eine in den Figuren durch einen Doppelpfeil angedeutete Axialrichtung X. Die Axialrichtung X verläuft parallel zur Längsmittelachse 8. Die Radialrichtung verläuft senkrecht zur Axialrichtung X. Die Umfangsrichtung läuft um die Längsmittelachse 8 um.

Das Ringfilterelement 2 weist einen ringförmigen Filterkörper 9 aus einem Filtermaterial 10 auf. Der Filterkörper 9 ist vom Medium durchströmbar. Das Filtermaterial 10 kann zweckmäßig gefaltet sein. Insbesondere kann der Filterkörper 9 einen sogenannten Faltenstern bilden. Des Weiteren weist das Ringfilterelement 2 eine ringförmige Innenzarge 11 aus einem Stützmaterial auf. Die Innenzarge 11 ist dabei konzentrisch im Filterkörper 9 angeordnet und ist ebenfalls vom Medium durchströmbar. Hierzu kann die Innenzarge 11 eine Stützstruktur 12 aufweisen, die mehrere radiale Durchtrittsöffnungen 13 besitzt, wodurch die Stützstruktur 12 bzw. die Innenzarge 11 für das Medium durchströmbar ist. Das Stützmaterial der Innenzarge 11 selbst ist dagegen für das Medium undurchlässig. Die Durchströmung der Innenzarge 11 erfolgt demnach ausschließlich durch die Durchtrittsöffnungen 13.

Der Filterkörper 9 besitzt eine radial innenliegende Körperinnenseite 14 und eine radial außenliegende Körperaußenseite 15. Bei einem gefalteten Filtermaterial 10 wird die Körperinnenseite 14 durch die radial innenliegenden Falze gebildet, während die Körperaußenseite 15 durch die radial außenliegenden Falze gebildet ist. Bei einem gefalteten Filtermaterial 10 sind benachbarte Falten jeweils durch einen innenliegenden bzw. außenliegenden Falz miteinander verbunden. Die Anströmseite 7 des Filterkörpers 9 wird durch die außenliegende Oberfläche des Filtermaterials 10 gebildet. Eine Abströmseite 16 des Filterkörpers 9 wird durch die innenliegende Oberfläche des Filtermaterials 10 gebildet. Die Anströmseite 7 und die Abströmseite 16 beziehen sich dabei auf den Filtrationsbetrieb I und die damit einhergehende Durchströmungsrichtung von radial außen nach innen und schließen bei einem gefalteten Filtermaterial 10 die Oberflächen der Falten mit ein.

Die Innenzarge 11 weist eine radial außenliegende Zargenaußenseite 17 und eine radial innenliegende Zargeninnenseite 18 auf. Beim hier vorgestellten Ringfilterelement 2 liegt der Filterkörper 9 mit seiner Körperinnenseite 14 radial an der Zargenaußenseite 17 an. Diese radiale Anlage erfolgt zweckmäßig über die gesamte axiale Erstreckung des Filterkörpers 9 und der Innenzarge 11. Für den Filtrationsbetrieb I kann so der Filterkörper 9 die Druckdifferenz zwischen Anströmseite 7 und Abströmseite 16 an der Innenzarge 11 abstützen, wodurch das Filtermaterial 10 entlastet ist.

Das hier vorgestellte Ringfilterelement 2 ist außerdem mit wenigstens einem Halter 19 ausgestattet, der axial zwischen den axialen Enden des Filterkörpers 9 und der Innenzarge 11 angeordnet ist. Im gezeigten Beispiel besitzt das Ringfilterelement 2 an den axialen Enden des Filterkörpers 9 und der Innenzarge 11 jeweils eine Endscheibe, nämlich eine erste Endscheibe 20 und eine zweite Endscheibe 21. Die erste Endscheibe 20 ist dem Anschluss 4 der Halterung 3 zugewandt und kann als offene Endscheibe ausgestaltet sein. Die zweite Endscheibe 21 befindet sich dagegen an dem von dem Anschluss 4 abgewandten axialen Ende und kann als geschlossene Endscheibe ausgestaltet sein. Im gezeigten Beispiel ist das Ringfilterelement 2 nur mit einem einzigen Halter 19 ausgestattet. Es ist klar, dass auch zwei oder mehr derartige Haltere 19 vorgesehen sein können, die dann axial voneinander beabstandet angeordnet sind.

Der jeweilige Halter 19 weist einen Expansionskörper 22 auf, der aus einem expandierten Expansionsmaterial besteht. Der Expansionskörper 22 kann insbesondere ein Schaumköper sein. Dieser Expansionskörper 22 ist radial innen mit der Innenzarge 11 fest verbunden und radial außen mit dem Filterkörper 9 fest verbunden. Bevorzugt ist dabei die hier gezeigte Ausgestaltungsform, bei welcher das Expansionsmaterial des Expansionskörpers 22 einige der Durchtrittsöffnungen 13 der Innenzarge 11 durchdringt, und zwar vorzugsweise derart, dass das Expansionsmaterial dadurch die Stützstruktur 12 hintergreift. Im Einzelnen durchdringt das Expansionsmaterial die jeweiligen Durchtrittsöffnung 13 radial und erstreckt sich an der Zargeninnenseite 18 in der Axialrichtung und in der Umfangsrichtung über einen Öffnungsrand der jeweiligen Durchtrittsöffnung 13 hinaus. Mit anderen Worten liegt der Expansionskörper 22 auch an der Zargeninnenseite 18 an und stützt sich daran ab. Hierdurch ergibt sich ein besonders intensiver Formschluss zwischen Expansionskörper 22 und Innenzarge 11.

Des Weiteren ist zweckmäßig vorgesehen, dass das Expansionsmaterial an der Körperinnenseite 14 in das Filtermaterial 10 eindringt, so dass dort das Filtermaterial 10 in das Expansionsmaterial eingebettet ist. Beispielsweise besitzt das Filtermaterial 10 eine Faserstruktur, die Poren ausbildet. Das Expansionsmaterial dringt in diese Poren ein und hintergreift die Faserstruktur, so dass sich auch dort ein Formschluss ausgebildet. Insbesondere umgreift das Expansionsmaterial ein Vielzahl von Fasern des Filtermaterials 10, wodurch das Filtermaterial 10 in das Expansionsmaterial eingebettet wird. Dementsprechend ergibt sich auch hier eine feste und stabile Verbindung zwischen Expansionskörper 22 und Filterkörper 9.

Der Halter 19 sorgt somit für eine feste Anbindung der Körperinnenseite 14 an der Zargenaußenseite 17 und somit für eine feste Verbindung zwischen Filterkörper 9 und Innenzarge 11. Im gezeigten Beispiel erstreckt sich der Halter 19 in der Umfangsrichtung über wenigstens 360° und sorgt so für eine in der Umfangsrichtung vollständig umlaufende Anbindung zwischen Innenzarge 11 und Filterkörper 9. Beim gefalteten Filtermaterial 10 erstreckt sich der Halter 19 in der Umfangsrichtung und ist mit allen radial innenliegenden Falzen fest verbunden.

Besonders vorteilhaft ist die hier gezeigte Ausführungsform, bei welcher der Halter 19 ringförmig ausgestaltet ist und sich in der Umfangsrichtung erstreckt. Insbesondere kann der Halter 19 dabei wie gezeigt einen geschlossenen Ring bilden. Im Beispiel ist der ringförmige Halter 19 als Kreis geformt und liegt in einer senkrecht zur Längsmittelachse 8 des Filterelements 2 verlaufenden Radialebene.

Zweckmäßig handelt es sich beim Expansionsmaterial um ein Kunstharz, das aufgeschäumt und ausgehärtet ist. Das Expansionsmaterial kann dabei offenporig oder geschlossenporig ausgestaltet sein. Bevorzugt ist das Expansionsmaterial ein Epoxidharz, das mit Hilfe eines Härters aufschäumt und aushärtet.

Das hier vorgestellte Ringfilterelement 2 charakterisiert sich somit durch wenigstens einen innenliegenden Halter 19, wobei sich der Begriff "innenliegend" auf die Anordnung des Halters 19 an der Abströmseite 16 des Filterkörpers 9 bezieht. Hierdurch kann der Halter 19 nicht mit den im Medium mitgeführten Verunreinigungen bzw. mit dem im Medium mitgeführten Produkt in Kontakt kommen. Der innenliegende Halter 19 ist dabei quasi zwischen dem Filterkörper 9 und der Innenzarge 12 angeordnet.

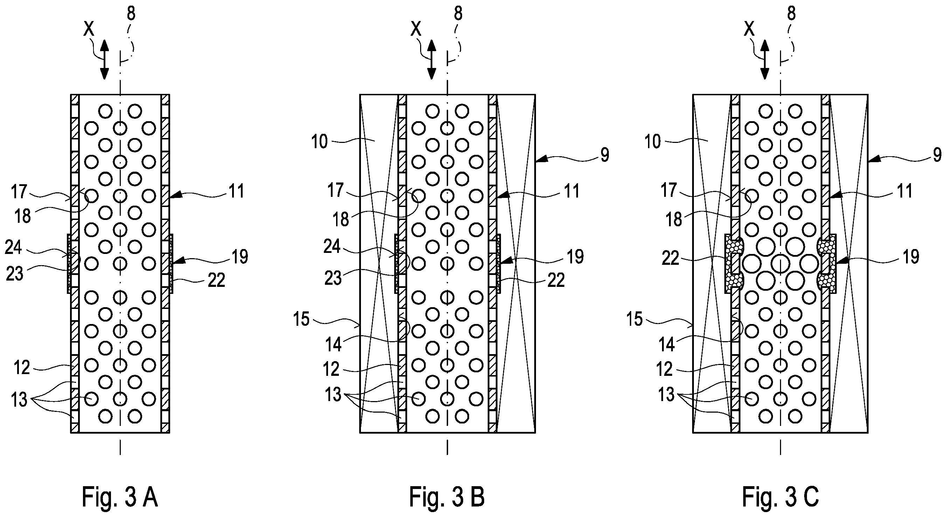

Nachfolgend wird anhand der Figuren 3A, 3B und 3C ein Verfahren zum Herstellen eines derartigen Ringfilterelements 2 vorgestellt.

Zunächst wird in einem Schritt A gemäß Figur 3A der wenigstens eine Halter 19 an der Zargenaußenseite 17 festgelegt. Hierbei ist das Expansionsmaterial des Expansionskörpers 22 noch nicht expandiert und befindet sich somit in einem Ausgangszustand oder Rohzustand und besitzt ein Anfangsvolumen. Der jeweilige Halter 19 kann beispielsweise als endloses Bandmaterial bereitgestellt werden. Der Halter 19 kann selbsthaftend ausgestaltet sein, so dass er an der Zargenaußenseite 17 selbsttätig haftet. Beispielsweise kann der Halter 19 zumindest an seiner der Innenzarge 11 zugewandten radialen Innenseite 23 haftend oder klebend ausgestaltet sein. Zur vereinfachten Handhabung und Montage des Halters 19 kann eine von der Innenzarge 11 abgewandte radiale Außenseite 24 des Halters 19 dagegen nicht haftend bzw. nicht klebend ausgestaltet sein. Vorzugsweise besitzt das Expansionsmaterial im Ausgangszustand eine adhäsive Oberfläche, die zum Ankleben des Halters 19 an der Innenzarge 12 genutzt werden kann. Zweckmäßig kann die radiale Außenseite 24 des Halters 19 bezüglich der Klebewirkung deaktiviert sein. Beispielsweise kann die Oberfläche des Expansionsmaterials an der Außenseite 24 mit einer nicht haftenden Beschichtung, also mit einer Antihaftbeschichtung versehen bzw. versiegelt sein. Beispielsweise kann die Antihaftbeschichtung als Wachsbeschichtung ausgestaltet sein, die eine kleine Schichtdicke, insbesondere weniger als 10µm, aufweisen kann.

In einem Schritt B werden gemäß Figur 3B der Filterkörper 9 und die Innenzarge 11 ineinander gesteckt, derart, dass die Körperinnenseite 14 zumindest am jeweiligen Halter 19 anliegt. Da das Filtermaterial 10 üblicherweise eine gewisse Elastizität besitzt, können die Abmessungen von Innenzarge 11 und Filterkörper 9 so aufeinander abgestimmt sein, dass der Filterkörper 9 an der Körperinnenseite 14 im Wesentlichen über die gesamte axiale Länge an der Innenzarge 11 bzw. am jeweiligen Halter 19 anliegt. Es ist klar, dass am Übergang zwischen Innenzarge 11 und dem jeweiligen Halter 19 Lücken entstehen können, in denen die Körperinnenseite 14 weder an der Innenzarge 11, noch am jeweiligen Halter 19 anliegt.

Das Stecken von Filterkörper 9 und Innenzarge 11 kann so erfolgen, dass der Filterkörper 9 auf die Innenzarge 11 aufgesteckt wird. Ebenso kann die Innenzarge 11 in den Filterkörper 9 eingesteckt werden.

In einem Schritt C erfolgt nun gemäß Figur 13 eine Aktivierung des Expansionsmaterials, so dass dieses expandiert und sich in der Folge fest mit der Innenzarge 11 und fest mit dem Filterkörper 9 verbindet. Für eine optimale Verbindung des Expansionsmaterials mit der Innenzarge 11 und mit dem Filterkörper 9 kann der Filterkörper 9 während der Expansion des Expansionsmaterials radial gegen die Innenzarge 11 angedrückt werden. Während des Expansionsvorgangs ist das Expansionsmaterial quasi fließfähig und verdrängbar, so dass bei einem gefalteten Filtermaterial 10 die innenliegenden Falze in das Expansionsmaterial eingedrückt werden können, bis sie auch im Bereich des jeweiligen Halters 19 an der Zargenaußenseite 17 zur Anlage kommen. Wie bereits vorstehend erläutert, kann das Expansionsmaterial während der Expansion in einige der Durchtrittsöffnungen 13 eindringen und diese vorzugsweise durchdringen und an der Zargeninnenseite 18 weiter expandieren, und zwar insbesondere auch in der Umfangsrichtung und in der Axialrichtung X. Außerdem kann das Expansionsmaterial in das Filtermaterial 10 hinein expandieren, wodurch letztlich das Filtermaterial 10 in das Expansionsmaterial eingebettet wird.

Die Aktivierung des Expansionsmaterials kann auf beliebige geeignete Weise erfolgen. Bevorzugt ist eine thermische Aktivierung. Hierzu wird die Baugruppe, die zumindest die Innenzarge 11, den jeweiligen Halter 19 und den Filterkörper 9 umfasst, auf die erforderliche Aktivierungstemperatur erwärmt. Durch die Aktivierung schäumt das Expansionsmaterial auf und härtet aus. Beispielsweise kann es sich beim Expansionsmaterial um ein Kunststoffharz, vorzugsweise auf Epoxid-Basis, handeln, das mit Hilfe eines geeigneten Härters zum Schäumen und Aushärten aktivierbar ist.

Besonders vorteilhaft ist eine Ausführungsform, bei welcher der Härter mikrogekapselt ist, also in Mikrokapseln eingefasst ist, die im Rohharz verteilt angeordnet sind. Beim Rohharz handelt es sich um das noch nicht aktivierte, also nicht geschäumte und nicht ausgehärtete Harz. Durch die Aktivierung, insbesondere durch die thermische Aktivierung, werden die Mikrokapseln beschädigt, so dass der Härter im Rohharz freigesetzt bzw. aus den Mikrokapseln austreten kann. Hierdurch kommt es zur gewünschten chemischen Reaktion, die das Aufschäumen bzw. Expandieren des Harzes und das Härten des Harzes bewirkt.

## Patentansprüche

1. Ringfilterelement (2) zum Filtern eines flüssigen oder gasförmigen Mediums,
- mit einem ringförmigen Filterkörper (9) aus einem Filtermaterial (10), der vom Medium durchströmbar ist, und
- mit einer ringförmigen Innenzarge (11) aus einem Stützmaterial, die konzentrisch im Filterkörper (9) angeordnet ist und die vom Medium durchströmbar ist,
- wobei der Filterkörper (9) mit seiner radial innenliegenden Körperinnenseite (14) radial an einer radial außenliegenden Zargenaußenseite (17) anliegt,
- wobei das Ringfilterelement (2) wenigstens einen Halter (19) aufweist, der an der Körperinnenseite (14) angeordnet ist,
**dadurch gekennzeichnet,**
- **dass** der Halter (19) einen Expansionskörper (22) aus einem expandierten Expansionsmaterial aufweist,
- **dass** der Expansionskörper (22) nach dem Expandieren ein Schaumkörper ist, und
- **dass** der Expansionskörper (22) radial innen mit der Innenzarge (11) und radial außen mit dem Filterkörper (9) fest verbunden ist.

2. Ringfilterelement (2) nach Anspruch 1,
**dadurch gekennzeichnet,**
**dass** der Expansionskörper (22) mittels Formschluss an der Innenzarge (11) befestigt ist.

3. Ringfilterelement (2) nach Anspruch 1 oder 2,
**dadurch gekennzeichnet,**
- **dass** die Innenzarge (11) eine Stützstruktur (12) mit radialen Durchtrittsöffnungen (13) aufweist, die vom Medium durchströmbar sind,
- **dass** das Expansionsmaterial einige dieser Durchtrittsöffnungen (13) zumindest teilweise ausfüllt und/oder durchdringt.

4. Ringfilterelement (2) nach Anspruch 3,
**dadurch gekennzeichnet,**
**dass** das Expansionsmaterial einige dieser Durchtrittsöffnungen (13) radial durchdringt und die Stützstruktur (12) hintergreift.

5. Ringfilterelement (2) nach einem Ansprüche 1 bis 4,
**dadurch gekennzeichnet,**
**dass** der Expansionskörper (22) mittels Formschluss am Filterkörper (9) befestigt ist.

6. Ringfilterelement (2) nach einem der Ansprüche 1 bis 5,
**dadurch gekennzeichnet,**
**dass** das Expansionsmaterial an der Körperinnenseite (14) in das Filtermaterial (10) eindringt, so dass dort das Filtermaterial (10) in das Expansionsmaterial eingebettet ist.

7. Ringfilterelement (2) nach einem der vorhergehenden Ansprüche,
**dadurch gekennzeichnet,**
**dass** sich jeder Halter (19) oder wenigstens einer der Halter (19) in der Umfangsrichtung über wenigstens 360° erstreckt.

8. Ringfilterelement (2) nach einem der vorhergehenden Ansprüche,
**dadurch gekennzeichnet,**
- **dass** das Filtermaterial (10) gefaltet ist, wobei benachbarte Falten jeweils durch einen Falz miteinander verbunden sind,
- **dass** sich jeder Halter (19) oder wenigstens einer der Halter (19) in der Umfangsrichtung erstreckt und mit allen radial innenliegenden Falzen fest verbunden ist.

9. Verfahren zum Herstellen eines Ringfilterelements (2) zum Filtern eines flüssigen oder gasförmigen Mediums,
- wobei das Ringfilterelement (2) einen ringförmigen Filterkörper (9) aus einem Filtermaterial (10), der vom Medium durchströmbar ist, und eine ringförmige Innenzarge (11) aus einem Stützmaterial aufweist, die konzentrisch im Filterkörper (9) angeordnet ist und die vom Medium durchströmbar ist,
- wobei der Filterkörper (9) mit seiner radial innenliegenden Körperinnenseite (14) radial an einer radial außenliegenden Zargenaußenseite (17) anliegt,
- wobei das Ringfilterelement (2) wenigstens einen Halter (19) aufweist, der an der Körperinnenseite (14) angeordnet ist und der einen Expansionskörper (22) aus einem expandierten Expansionsmaterial aufweist,
- wobei der Expansionskörper (22) radial innen mit der Innenzarge (11) und radial außen mit dem Filterkörper (9) fest verbunden ist,
wobei das Verfahren folgende Schritte aufweist:
A: Festlegen des wenigstens einen Halters (19) an der Zargenaußenseite (17), wobei das Expansionsmaterial noch nicht expandiert ist,
B: Anordnen des Filterkörpers (9) und der Innenzarge (11) aneinander, so dass die Körperinnenseite (14) zumindest am jeweiligen Halter (19) anliegt,
C: Aktivieren des Expansionsmaterials, so dass dieses expandiert und sich dadurch mit der Innenzarge (11) und mit dem Filterkörper (9) fest verbindet und den Expansionskörper (22) bildet, der nach dem Expandieren ein Schaumkörper ist.

10. Verfahren nach Anspruch 9,
**dadurch gekennzeichnet,**
**dass** zumindest während der Expansion des Expansionsmaterials das Filtermaterial (10) radial gegen die Innenzarge (11) angedrückt wird.

11. Verfahren nach Anspruch 9 oder 10,
**dadurch gekennzeichnet,**
**dass** der jeweilige Halter (19) zumindest während der Schritte A und B mit seiner radialen Innenseite (23) an der Zargenaußenseite (17) haftet.

12. Verfahren nach einem der Ansprüche 9 bis 11,
**dadurch gekennzeichnet,**
- **dass** das Expansionsmaterial in Schritt C in Durchtrittsöffnungen (13) einer Stützstruktur (12) der Innenzarge (11) hinein expandiert, und/oder
- **dass** das Expansionsmaterial in Schritt C in das Filtermaterial (10) hinein expandiert.

13. Verfahren nach einem der Ansprüche 9 bis 12,
**dadurch gekennzeichnet,**
**dass** das Expansionsmaterial ein Harz ist, das mittels eines Härters aktivierbar ist, so dass es expandiert und aushärtet.

14. Verfahren nach Anspruch 13,
**dadurch gekennzeichnet,**
**dass** der Härter im nicht expandierten Zustand des Expansionsmaterials in Mikrokapseln gekapselt ist, die im Harz eingebettet sind und die durch die Aktivierung den Härter freisetzen.

15. Filtereinrichtung (1) zum Filtern eines flüssigen oder gasförmigen Mediums,
- mit wenigstens einem Ringfilterelement (2) nach einem der Ansprüche 1 bis 8,
- wobei die Filtereinrichtung (1) zur Durchführung eines Filtrationsbetriebs (I) ausgestaltet ist, bei dem zumindest ein Ringfilterelement (2) radial von außen nach innen von dem zu filternden Medium durchströmt wird,
- wobei die Filtereinrichtung (1) zur Durchführung eines Regenerationsbetriebs (II) ausgestaltet ist, bei dem zumindest ein Ringfilterelement (2) radial von innen nach außen durchströmt wird.

## Claims

1. Ring filter element (2) for filtering a liquid or gaseous medium,
- having a ring-shaped filter body (9) made of a filter material (10) through which the medium can flow, and
- having a ring-shaped inner frame (11) made of a support material which is arranged concentrically in the filter body (9) and through which the medium can flow,
- wherein the filter body (9) rests with its radially internal body inner side (14) radially on a radially external frame outer side (17),
- wherein the ring filter element (2) has at least one holder (19) which is arranged on the body inner side (14), **characterised in**
- **that** the holder (19) has an expansion body (22) made of an expanded expansion material,
- **that** after the expansion, the expansion body (22) is a foamed body, and
- **that** the expansion body (22) is securely connected radially on the inside to the inner frame (11) and radially on the outside to the filter body (9).

2. Ring filter element (2) according to claim 1,
**characterised in**
**that** the expansion body (22) is fastened to the inner frame (11) by means of positive locking.

3. Ring filter element (2) according to claim 1 or 2,
**characterised in**
- **that** the inner frame (11) has a support structure (12) with radial through-openings (13) through which the medium can flow,
- **that** the expansion material at least partially fills and/or penetrates through some of these through-openings (13).

4. Ring filter element (2) according to claim 3,
**characterised in**
**that** the expansion material penetrates radially through some of these through-openings (13) and grips behind the support structure (12).

5. Ring filter element (2) according to any of claims 1 to 4,
**characterised in**
**that** the expansion body (22) is fastened to the filter body (9) by means of positive locking.

6. Ring filter element (2) according to any of claims 1 to 5,
**characterised in**
**that** the expansion material penetrates on the body inner side (14) into the filter material (10) such that the filter material (10) is embedded into the expansion material there.

7. Ring filter element (2) according to any of the preceding claims,
**characterised in**
**that** each holder (19) or at least one of the holders (19) extends across at least 360° in circumferential direction.

8. Ring filter element (2) according to any of the preceding claims, **characterised in**
- **that** the filter material (10) is pleated, wherein adjacent pleats are connected to one another in each case by a fold,
- **that** each holder (19) or at least one of the holders (19) extends in circumferential direction and is securely connected to all radially inlying folds.

9. Method for manufacturing a ring filter element (2) for filtering a liquid or gaseous medium,
- wherein the ring filter element (2) has a ring-shaped filter body (9) made of a filter material (10) through which the medium can flow, and has a ring-shaped inner frame (11) made of a support material, which is arranged concentrically in the filter body (9) and through which the medium can flow,
- wherein the filter body (9) rests with its radially internal body inner side (14) radially on a radially external frame outer side (17),
- wherein the ring filter element (2) has at least one holder (19) which is arranged on the body inner side (14) and which has an expansion body (22) made of an expanded expansion material,
- wherein the expansion body (22) is securely connected radially on the inside to the inner frame (11) and radially on the outside to the filter body (9),
wherein the method has the following steps:
A: Fixing the at least one holder (19) to the outside of the frame (17), wherein the expansion material is not yet expanded,
B: Arranging the filter body (9) and the inner frame (11) against one another such that the body inner side (14) rests at least on the respective holder (19),
C: Activating the expansion material such that this expands and is thus securely connected to the inner frame (11) and the filter body (9) and forms the expansion body (22) which, after the expansion, is a foamed body.

10. Method according to claim 9,
**characterised in**
**that** at least during the expansion of the expansion material, the filter material (10) is pressed radially against the inner frame (11).

11. Method according to claim 9 or 10,
**characterised in**
**that** the respective holder (19) adheres with its radial inner side (23) to the frame outer side (17), at least during steps A and B.

12. Method according to any of claims 9 to 11,
**characterised in**
- **that** the expansion material in step C expands into through-openings (13) of a support structure (12) of the inner frame (11), and/or
- **that** the expansion material in step C expands into the filter material (10).

13. Method according to any of claims 9 to 12,
**characterised in**
**that** the expansion material is a resin which can be activated by means of a hardener, such that it expands and hardens.

14. Method according to claim 13,
**characterised in**
**that** in the non-expanded state of the expansion material, the hardener is encapsulated in microcapsules which are embedded in the resin and which release the hardener by means of the activation.

15. Filter device (1) for filtering a liquid or gaseous medium,
- having at least one ring filter element (2) according to any of claims 1 to 8,
- wherein the filter device (1) is designed to carry out a filtration operation (I) in which the medium to be filtered flows through at least one ring filter element (2) radially from the outside to the inside,
- wherein the filter device (1) is designed to carry out a regeneration operation (II) in which at least one ring filter element (2) is flowed through radially from the inside to the outside.

## Revendications

1. Élément de filtre annulaire (2) pour la filtration d'un milieu liquide ou gazeux,
- avec un corps de filtre (9) annulaire en un matériau de filtre (10) qui peut être traversé par le milieu, et
- avec un cadre intérieur (11) annulaire en un matériau d'appui qui est agencé de manière concentrique dans le corps de filtre (9) et qui peut être traversé par le milieu,
- dans lequel le corps de filtre (9) repose avec son côté intérieur de corps (14) radialement intérieur contre un côté extérieur de cadre (17) radialement extérieur,
- dans lequel l'élément de filtre annulaire (2) présente au moins un support (19) qui est agencé sur le côté intérieur de corps (14), **caractérisé en ce**
- **que** le support (19) présente un corps de détente (22) en un matériau de détente expansé,
- **que** le corps de détente (22) est après la détente un corps en mousse, et
- **que** le corps de détente (22) est fixement relié radialement à l'intérieur au cadre intérieur (11) et radialement à l'extérieur au corps de filtre (9).

2. Élément de filtre annulaire (2) selon la revendication 1,
**caractérisé en ce**
**que** le corps de détente (22) est fixé par complémentarité de formes au cadre intérieur (11).

3. Élément de filtre annulaire (2) selon la revendication 1 ou 2,
**caractérisé en ce**
- **que** le cadre intérieur (11) présente une structure d'appui (12) avec des ouvertures de passage (13) radiales qui peuvent être traversées par le milieu,
- **que** le matériau de détente remplit et/ou traverse au moins partiellement certaines de ces ouvertures de passage (13).

4. Élément de filtre annulaire (2) selon la revendication 3,
**caractérisé en ce**
**que** le matériau de détente traverse radialement certaines de ces ouvertures de passage (13) et vient en prise derrière la structure d'appui (12).

5. Élément de filtre annulaire (2) selon l'une quelconque des revendications 1 à 4,
**caractérisé en ce**
**que** le corps de détente (22) est fixé par complémentarité de formes au corps de filtre (9).

6. Élément de filtre annulaire (2) selon l'une quelconque des revendications 1 à 5,
**caractérisé en ce**
**que** le matériau de détente pénètre au niveau du côté intérieur de corps (14) dans le matériau de filtre (10) de sorte que le matériau de filtre (10) y soit intégré dans le matériau de détente.

7. Élément de filtre annulaire (2) selon l'une quelconque des revendications précédentes,
**caractérisé en ce**
**que** chaque support (19) ou au moins un des supports (19) s'étend dans le sens périphérique sur au moins 360°.

8. Élément de filtre annulaire (2) selon l'une quelconque des revendications précédentes, **caractérisé en ce**
- **que** le matériau de filtre (10) est plié, dans lequel des plis contigus sont reliés entre eux respectivement par une rainure,
- **que** chaque support (19) ou au moins un des supports (19) s'étend dans le sens périphérique et est fixement relié à toutes les rainures radialement intérieures.

9. Procédé de fabrication d'un élément de filtre annulaire (2) pour la filtration d'un milieu liquide ou gazeux,
- dans lequel l'élément de filtre annulaire (2) présente un corps de filtre (9) annulaire en un matériau de filtre (10) qui peut être traversé par le milieu, et un cadre intérieur (11) annulaire en un matériau d'appui qui est agencé de manière concentrique dans le corps de filtre (9) et qui peut être traversé par le milieu,
- dans lequel le corps de filtre (9) repose avec son côté intérieur de corps (14) radialement intérieur contre un côté extérieur de cadre (17) radialement extérieur,
- dans lequel l'élément de filtre annulaire (2) présente au moins un support (19) qui est agencé au niveau du côté intérieur de corps (14) et qui présente un corps de détente (22) en un matériau de détente expansé,
- dans lequel le corps de détente (22) est fixement relié radialement à l'intérieur au cadre intérieur (11) et radialement à l'extérieur au corps de filtre (9),
dans lequel le procédé présente les étapes suivantes :
A : fixer au moins un support (19) au côté extérieur de cadre (17), dans lequel le matériau de détente n'est pas encore expansé,
B : agencer le corps de filtre (9) et le cadre intérieur (11) l'un au niveau de l'autre de sorte que le côté intérieur de corps (14) repose au moins contre le support (19) respectif,
C : activer le matériau de détente de sorte que celui-ci se détende et se relie fixement ainsi au cadre intérieur (11) et au corps de filtre (9) et forme le corps de détente (22) qui est après la détente un corps en mousse.

10. Procédé selon la revendication 9,
**caractérisé en ce**
**qu'**au moins pendant la détente du matériau de détente, le matériau de filtre (10) est pressé radialement contre le cadre intérieur (11).

11. Procédé selon la revendication 9 ou 10,
**caractérisé en ce**
**que** le support (19) respectif adhère au moins pendant les étapes A et B avec son côté intérieur (23) radial contre le côté extérieur de cadre (17).

12. Procédé selon l'une quelconque des revendications 9 à 11,
**caractérisé en ce**
- **que** le matériau de détente dans l'étape C se détend dans des ouvertures de passage (13) d'une structure d'appui (12) du cadre intérieur (11), et/ou
- **que** le matériau de détente dans l'étape C se détend dans le matériau de filtre (10).

13. Procédé selon l'une quelconque des revendications 9 à 12,
**caractérisé en ce**
**que** le matériau de détente est une résine qui peut être activée au moyen d'un agent durcisseur de sorte qu'il se détende et durcisse.

14. Procédé selon la revendication 13,
**caractérisé en ce**
**que** l'agent durcisseur est encapsulé dans l'état non-détendu du matériau de détente dans des microcapsules qui sont intégrées dans la résine et qui libèrent l'agent durcisseur par l'activation.

15. Dispositif de filtre (1) pour la filtration d'un milieu liquide ou gazeux,
- avec au moins un élément de filtre annulaire (2) selon l'une quelconque des revendications 1 à 8,
- dans lequel le dispositif de filtre (1) est configuré pour la réalisation d'un fonctionnement de filtration (I)
pour lequel au moins un élément de filtre annulaire (2) est traversé radialement de l'extérieur vers l'intérieur par le milieu à filtrer,
- dans lequel le dispositif de filtre (1) est configuré pour la réalisation d'un fonctionnement de régénération (II), pour lequel au moins un élément de filtre annulaire (2) est traversé radialement de l'intérieur vers l'extérieur.
